Europäisches Patentamt

European Patent Office

Office européen des brevets

(11) Publication number: **0 203 194**
**A1**

## (12) EUROPEAN PATENT APPLICATION

published in accordance with Art. 158(3) EPC

(21) Application number: **85901091.0**

(22) Date of filing: **26.02.85**

Data of the international application taken as a basis:

(86) International application number:
**PCT/KR 85/00002**

(87) International publication number:
**WO 86/03330 (05.06.86 86/12)**

(51) Int. Cl.⁴: **H 01 J 9/24**

(30) Priority: **28.11.84 KR 7442**

(43) Date of publication of application: **03.12.86**
**Bulletin 86/49**

(84) Designated Contracting States: **AT BE CH DE FR GB LI LU NL SE**

(71) Applicant: **KANG, Hyong, Won, 209-20, Kuui-Dong, Seong dong-Ku, Seoul 133 (KR)**

(72) Inventor: **KANG, Hyong, Won, 209-20, Kuui-Dong, Seong dong-Ku, Seoui 133 (KR)**

(74) Representative: **Hirsch, Marc-Roger, Cabinet Hirsch 34 rue de Bassano, F-75008 Paris (FR)**

(54) **METHOD OF MANUFACTURING GLASS TUBES FOR W-SHAPED AND DOUBLE-W-SHAPED FLUORESCENT LAMPS.**

㊗ A method of manufacturing glass tubes for W-shaped and double-W-shaped fluorescent discharge tubes. In this method, short, standardized U-shaped tubes (1), (1') are abutted vertically on each other and are fusioned into single unit from the outside by burners (3), (3'). This eliminates the operation of bending a single elongated glass tube a plurality of times, enables the practicing of a precise tube-bending operation, and reduces the volume of the tube. According to this method, attractive, thin-walled tubes can be used without limiting the kind of material thereof. A large-diameter discharge tube which can be used instead of an incandescent lamp can also be manufactured easily.

# TITLE MODIFIED
### see front page

A PRODUCTION METHOD OF GLASS TUBE OF "W" AND "DOUBLE W"
TYPE FLUORESCENT LAMP

## Technical field

The present invention relates to a fluorescent discharge tube of incandescent lamp type which is developed in order to save energy more than ordinary incandescent lamps. The conventional tubes are manufactured in circular type, U-type and W-type, but on the contrary, the present invention provides a manufacturing method of weld-joining a plurality of unit tubes which are prepared in advance. This method makes the manufacturing easier and the tube body smaller, and not only so but this tube is engageable into the conventional incandescent lamp socket. These features contribute to savings of materials, energy and space, and improves aesthetical appearance. Even large capacity tubes with a large diameter can be disposed very densely, while no special glass material is required but any ordinary glasses are utilizable.

## Technical background

There have been conventionally methods of manufacturing glass tubes of W-type fluorescent lamps. But the methods were such that the middle portion of a long glass tube was heated to bend it into a U-type, and then, the middle points of the two straight portions of the bent tube were heated to bend them into a W-type tube. Since such bending work was a difficult process, no precision was atainable, heat energy was much wasted, and a thicker glass tube had to be prepared because the ductility of glass upon heating had to be taken into account. Such special requirements frequently resulted in that a minor defect in the glass material caused ruptures when bending the glass tube.

Further, although fluorescent lamps with large diameters show good discharge efficiency, the conventional method was not at all capable of bending such large diameter tubes, and therefore, could not produce

2

fluorescent lamps of W-type with high discharge efficiency. This is the factor that in can not replace the high energy-consuming incandescent lamps.

Moreover, in the conventional methods, the heat-bending of glass tube was carried out after the inside wall of the tube was coated with fluorescent substances, and therefore, the fluorescent substances fall off during the heat-bending process. Not only so, but the bending of glass tubes close to the adjacent tubes was impossible, and this made the W-type tube occupy a larger space, making them impractical for actual use. Further, pair W-type lamps were absolutely impossible to manufacture.

The above-described circumstances made the manufacturers of the field avoid producing W-type lamps, and consequently, no good quality products are being supplied because there are difficulties in the mass-productivity, characteristics maintaining, and life expectancy.

Initiation of invention

In the present invention, the production process is such that first a plurality of U-type unit tubes are made in advance, and these tubes are joined into W-type or pair W-type glass tubes through the process of facing-contact welding or insert-bonding welding. This method makes it possible to save energy and materials, and mass-production of products of balanced constitution and dense distribution is made realizable.

Brief description of drawings

- Figures 1 and 2 are respectively a frontal and plan view of the first embodiment of the present invention illustrating the manufacturing method;

- Figures 3 and 4 are exploded perspective views of the second embodiment of the present invention illustrating the manufacturing method;

- Figures 4 and 6 are respectively side and plan view of the second embodiment of Figures 3 and 4 illustrating the manufacturing method;

- Figure 7 is a partly sectional view of the third embodiment of the present invention illustrating the manufacturing method.

Best practice of the present invention

The present invention can be described further in detail below with reference to the attached drawings.

Example 1

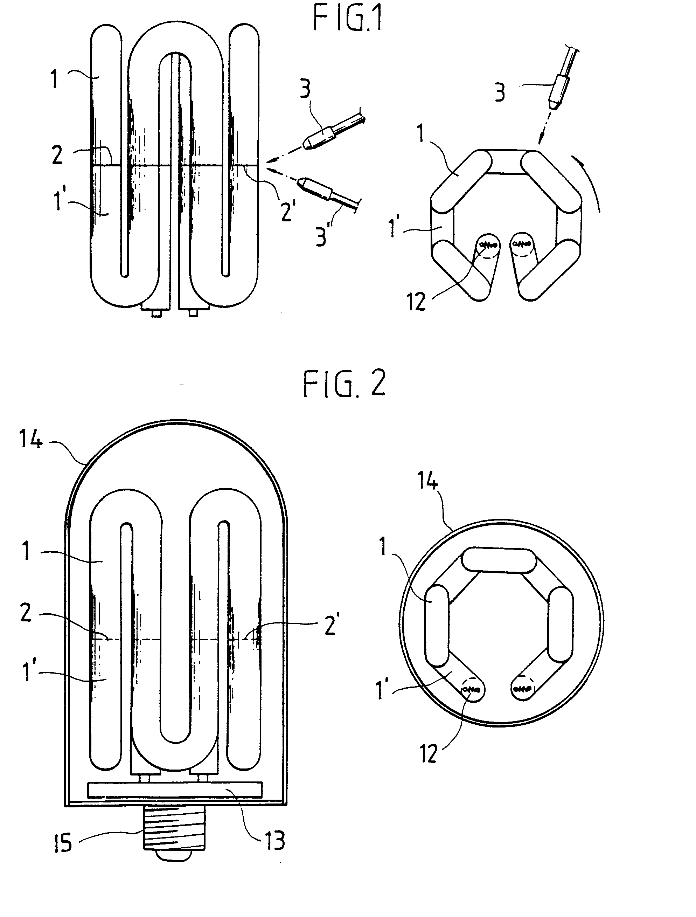

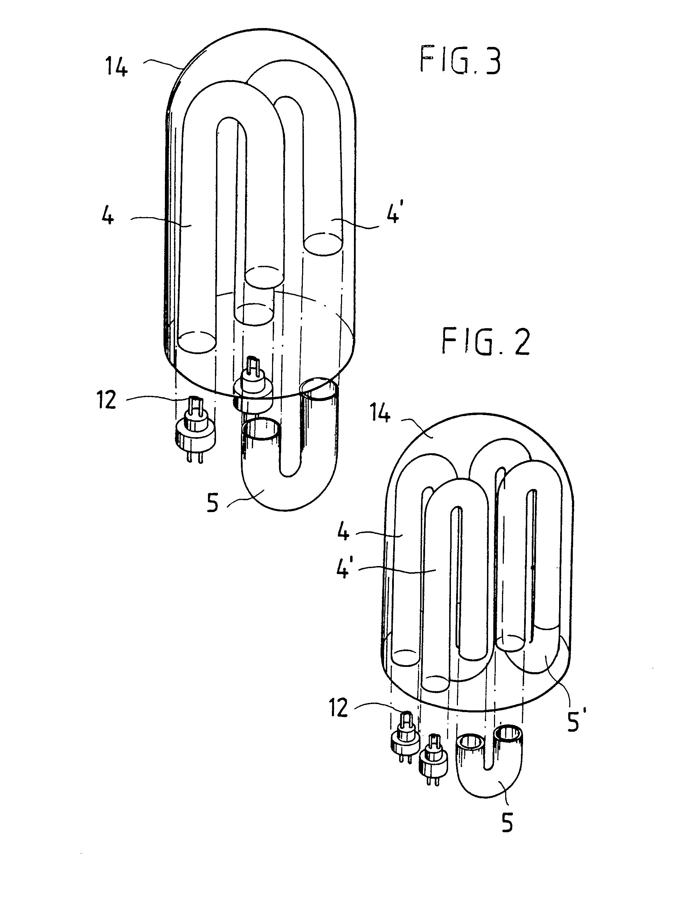

The U-type unit tubes 1, 1' of figures 1 and 2 which are made in advance in a certain size are joined at the joining area 2, 2' vertically, and are heated with a pair of burner 3, 3'. Then they are rotated in order, and the joining areas 2, 2' are melt-fixed. After that, air is supplied to smoothen the melt-fixed portion, and this completes the manufacturing process of W-type or pair W-type fluorescent glass tube of the present invention.

Example 2

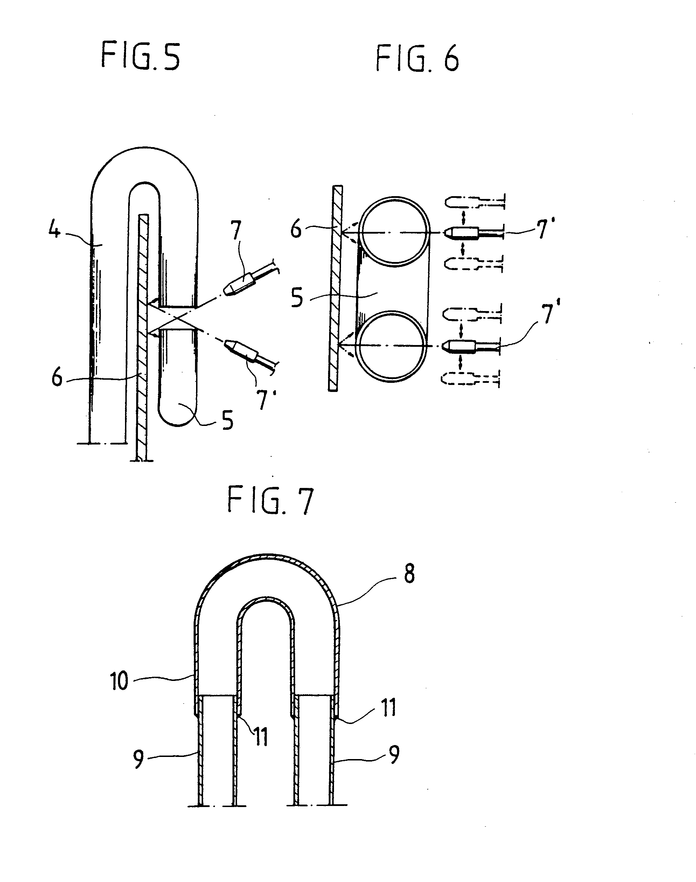

In joining together the U-type unit tube 4, 4' with one leg being longer and the U-type unit tube 5, 5' with both legs being of even length as shown in figure 3 through 6, the U-type unit tubes 4, 4' are made parallelly stood, and on the tips of the unit tubes 4, 4', the unit tubes 5, 5' are joined by making them inversely stand on the former. Then a heat-insulating plate 6 is provided in the middle of the space between the bent portions of each unit tube. And then the front tips of the U-type unit tubes 4, 4' and the rear tips of U-type unit tubes 5, 5' are heated by the upper burner 7, while the front tips of U-type unit tubes 5, 5' and the rear tips of the U-type unit tubes 4, 4' are heated by the lower burner 7', after having installed the pair of the burner. During this process, the reflected heat from the insulating plate 6 is made to heat the rear tips of U-type unit tubes 4, 4' and 5, 5', and by moving the burners 7, 7' leftward and rightward as shown in figure 6, the joined portions of the U-type unit tubes can be evenly heated and melt-fixed without moving the tubes. After this process, air is supplied to smoothen the melt-fixed portion, and thereby, W-type or pair W-type glass tubes of fluorescent lamps are produced.

Example 3

A U-type unit tube 8 with a larger diameter which is made in advance and with a low melting point is inserted with a U-type unit tube 9 with a smaller diameter as shown in figure 7. Between these inserted wall surfaces, adhesive 10 is spread as a preliminary bonding, and this portion is heated to 400°C on its inside and outside, to melt-fix the inner and outer tubes 8, 9 at its bonding line 11. Thereby W-type or pair W-type fluorescent lamps are produced. On the drawings, the reference No 12 indicates filament, 13 chalk, 14 external cap (this can be made in the form of sphere), and 15 socket.

## Possibility of industrial application

The present invention as described above does not use the process of bending a glass tube several times, but adopts the method of melt-fixing a plurality of a certain regular sized unit tubes in a certain angle, these unit tubes being made in advance and melt-fixing being performed at a high temperature or low temperature. Because the process is simple, the products can be easily mass-produced, because close bendings and close disposings are possible, an intense lighting is obtained with a small volume lamp. Not only so, but because long and large diameter W-type or pair W-type fluorescent lamps can be manufactured, the lighting efficiency is improved. This becomes a factor for replacing incandescent lamps, and at the same time, contributes to saving energy. Also because almost any glass material can be used in manufacturing the W-type or pair W-type fluorescent lamps according to the present invention, the scope of resources utilization is expanded.

## C L A I M S

1.- W-type or pair W-type glass tube for fluorescent lamps characterized in that the joining areas 2, 2' of U-type unit tubes 1, 1' which are made in advance in a certain size are vertically joined each other, and are heated with a pair of burner comprised of upper and lower ones 3, 3', and at the same time, rotated in sequence to melt-fix the said areas 2, 2'.

2.- W-type or pair W-type glass tube for fluorescent lamps characterized in that U-type unit tubes 4, 4' with one leg being longer and made in advance in a certain size are made parallelly stood, other U-type unit tubes 5, 5' with both legs being of even length are made inversely stood and joined on the tips of the said unit tubes 4, 4', and an insulating plate 6 is installed in the centre, the joined portions being heated by moving the upper and lower burners 7, 7' to melt-fix the tubes without moving the said tubes.

3.- W-type or pair W-type glass tube for fluorescent lamps characterized in that the tips of a U-type unit tube 8 made of glass with low melting point are inserted with the tips of another smaller diameter U-type unit tube 9, preliminarily bonded with adhesive 10, and then heated internally and externally to 400°C to melt-fix the both tubes each other at the joining line 11.

1/3

FIG.1

FIG. 2

0203194

FIG.3

14

4

4'

12

5

FIG.2

14

4

4'

12

5'

5

FIG.5          FIG. 6

FIG. 7

## INTERNATIONAL SEARCH REPORT

International Application No. PCT/KR85/00002

| I. CLASSIFICATION OF SUBJECT MATTER (if several classification symbols apply, indicate all) [3] |
|---|
| According to International Patent Classification (IPC) or to both National Classification and IPC |
| Int. Cl[4]      H01J9/24 |

**II. FIELDS SEARCHED**

| Minimum Documentation Searched [4] | |
|---|---|
| Classification System | Classification Symbols |
| IPC | H01J61/30-61/33, 9/24 |

| Documentation Searched other than Minimum Documentation to the Extent that such Documents are included in the Fields Searched [5] |
|---|
| Jitsuyo Shinan Koho                      1950 - 1984 |
| Kokai Jitsuyo Shinan Koho             1973 - 1984 |

**III. DOCUMENTS CONSIDERED TO BE RELEVANT [14]**

| Category[*] | Citation of Document, [16] with indication, where appropriate, of the relevant passages [17] | Relevant to Claim No. [18] |
|---|---|---|
| X | JP, A, 56-57246 (Matsushita Electric Works, Ltd.) 19 May 1981 (19. 05. 81), Page 3, upper right column, line 17 to lower left column, line 11 (Family : none) | 1 |
| X | JP, A, 52-58280 (Alfred Walz) 13 May 1977 (13. 05. 77), Page 4, lower left column, line 13 to lower right column, line 3 & DE, A, 2645794 & US, A, 4117372 & FR, B, 2331151 & GB, A, 1541292 | 3 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| May 23, 1985     (23. 05. 85) | June 3, 1985     (03. 06. 85) |
| International Searching Authority [1] | Signature of Authorized Officer [20] |
| Japanese Patent Office | |

Form PCT/ISA/210 (second sheet) (October 1981)